# EUROPEAN PATENT SPECIFICATION

(11) **EP 0 932 532 B1**
(45) Date of publication and mention of the grant of the patent: **08.01.2003**
(21) Application number: 97909804.3
(22) Date of filing: 14.10.1997
(51) Int. Cl.: B60R 25/10, H04Q 7/22

(54) **SMS-ALARM**
SMS-ALARM
ALARME UTILISANT LE SERVICE DE MESSAGES COURTS (SMS)

(30) Priority: 17.10.1996 SE 9603826
(43) Date of publication of application: 04.08.1999
(73) Proprietor: TELIA AB, 123 86 Farsta (SE)
(72) Inventor: KARLSSON, Conny, S-121 35 Johanneshov (SE)
(74) Representative: Akerman, Marten Lennart
(86) International application number: SE9701714
(87) International publication number: WO98016412

(56) References cited:
- EP-A- 0 417 944
- US-A- 4 887 291
- US-A- 5 416 725

## Description

### FIELD OF THE INVENTION

The present invention relates to a device and a method at a telecommunications system for generation of alarm signals.

### PRIOR ART

The share of cars which are equipped with alarm has increased in recent years. For different reasons by that also the number of false triggered alarms has unfortunately increased. This is applicable above all to cities where people nowadays hardly react on when a car alarm is sounding. In most cases the car cannot either be parked in such a way that the owner can hear if the alarm is triggered.

A big problem with the alarms of today is that the thieves within 5-10 seconds most often have succeded in switching off the alarm, which results in that it is only interpreted as one out of a large number of false alarms.

These factors have resulted in that the feeling of security of having an alarm device in the car to a great extent has been reduced. It consequently would be desirable to have more control over the alarm for getting immediate information if it is triggered, and by that rapidly be able to take suitable actions.

The present invention intends to solve this problem by utilizing an SMS-alarm (SMS = Short Message Services).

To find out whether the prior art has utilized SMS-alarm to solve above mentioned problem, a preliminary investigation was made, at which the following documents were found.
Document 1: US-A-5 416 725
2: US-A-4 887 291
3: US-A-5 272 465
4: US-A-5 351 235

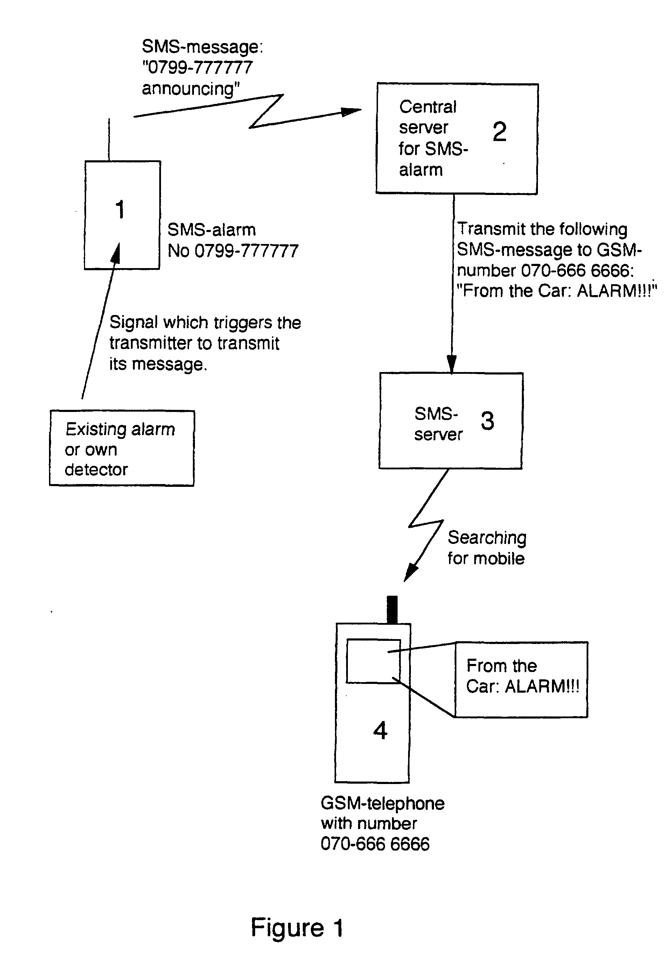

Document 1 relates to a computer based alarm system where a number of fixed or mobile sensors 38, 32 first transfer alarm information to the computer system 12 over an "alarm interface" 26, respective "remote unit interface" 30, and after that transmits alarm information in form of for instance text information over a cellular network to selected authorities or persons (column 7, line 4-15. See especially "Summary of the invention" and Figure 1 with belonging text.

Document 2 describes an alarm system by which, for instance, fire- or burglary alarm text information can be transmitted to a mobile pager. See especially "Abstract" and Figure 1 with belonging text.

Document 3 deals with an "Automatic alarm code converter" capable of receiving and processing alarm reports from different sources and with different codings and then generating an alarm report in form of a text message to a pager. See "Background of the invention" and "Summary of the invention" and Figure 1 with belonging text.

Document 4 describes a method to transmit SMS-messages between mobile units, or between fixed and mobile units, over a cellular network such as, for instance, GSM. See especially the embodiment which is explained in Figure 9-11 with belonging text, where information about, for instance, the amount of light fuel oil in a villa oil tank automatically can be transmitted to a mobile unit in form of an SMS-message.

The above documents referred to, consequently do not make use of any alarm device which explicitly transmits a preprogrammed SMS-message over a cellular telephone network.

Document EP 417944 is considered to represent the most relevant state of the art. The preambles of the independent claims 1 and 7 are based on this document. The document describes a method at a telecommunications system for generation of alarm signals, wherein an SMS-transmitter connected to a detector transmits a message to a central server for SMS-alarm. When said detector generates an alarm, said server identifies said SMS-transmitter and transmits a preprogrammed alarm message to a terminal, which is in the possession of the owner of said SMS-transmitter.

None of the above documents suggest how an activated alarm should be deactivated. The present invention addresses this problem.

### SUMMARY OF THE INVENTION

The aim of the present invention consequently is to solve the above-mentioned problem by utilising a computerised key set code service at a central station.

This aim is achieved by a device and a method which is characterised in that said central server is equipped with a computerized key set code service, so that said owner can switch off the alarm by means of a digital code.

The alarm according to the present invention has many advantages in comparison with ordinary car alarms.

One advantage is that when the alarm once has been triggered, the thief has no possibility to switch off the alarm.

Another advantage is that the alarm is portable. It doesn't matter where the owner is, provided that the owner carries with himself/herself his/her mobile telephone with SMS-reception or his/her minicall-receiver.

One more advantage of the present invention is that the owner of the alarm device at received alarm can call the police with his/her telephone. The owner of the alarm device consequently need not, as is the case today, go to his/her car to check from where the alarm sound is coming; the alarm may of course just as well come from another car.

Further characteristics of the invention are given in the subclaims.

### BRIEF DESCRIPTION OF THE INVENTION

In the following a more detailed description of the invention is given with reference to the enclosed figures.

Figure 1 describes schematically a telecommunications system where an SMS-alarm is connected to a GSM-telephone with an SMS-service.

Figure 2 describes schematically a telecommunications system where an SMS-alarm is connected to a pager service.

Figure 3 describes a potential scenario.

### DETAILED DESCRIPTION OF AN EMBODIMENT OF THE INVENTION

The invention consists of a transmitter in combination with a detector, at which the transmitter can transmit a preprogrammed SMS-message over the GSM-network to a central server which manages the service SMS-alarm. The number to this server is stored in the transmitter. This message is unique to each individual transmitter, and might consist of a subscriber number or the like.

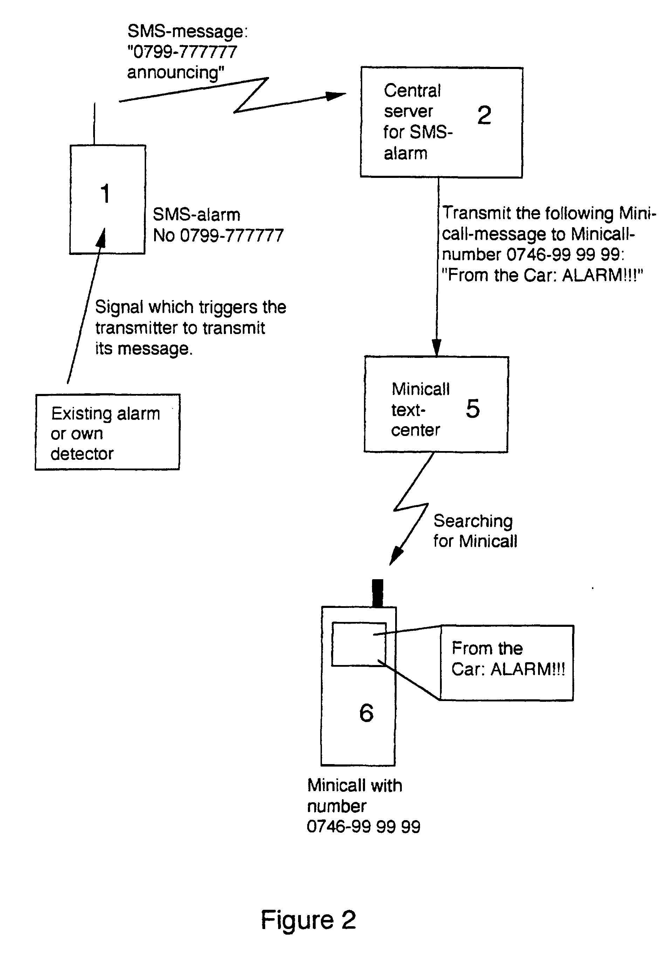

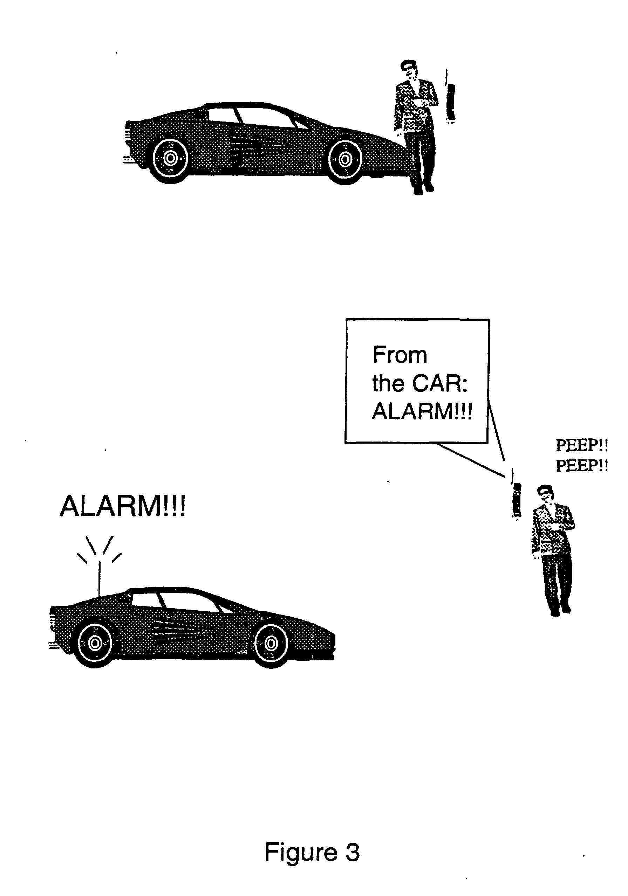

In the following the invention will be described first with reference to Figure 1 (the SMS-case), and then with reference to Figure 2 (the Minicall-case) MINICALL is a trademark of TELIA AB in connection with pager services. After that the invention will be described as it is preferably intended to be used with reference to Figure 3.

Let us suppose that the SMS-transmitter (Figure 1) is arranged inside a car and connected to on one hand a detector, and on the other an antenna device. The detector shall be activated at physical damage to the car, for instance if somebody tries to break open the lock of the door, or smashes a car window. It must of course be realized that the detector also can be integrated in the SMS-transmitter.

When the transmitter 1 receives a trigger signal from an alarm device or a detector, it immediately transmits its programmed message to the SMS-alarm server 2, for instance its subscriber number 0799-777777.

The central server 2 reads which transmitter that has transmitted an alarm and performs the instructions which are associated to just this SMS-alarm. It finds out which GSM-number that shall have the alarm message, the text to be used in it, how many messages that shall be transmitted, and with which intervals they shall be transmitted. These parameters can be selected freely by the customer and be changed when necessary.

After that the SMS-message is transmitted to the SMS-server 3 of an operator which in ordinary way makes a search of the mobile in question, 4. No modification of the SMS-server 3 needs to be done, since all functionality connected to the SMS-alarm is in the central server 2 for SMS-alarm. This also results in that when the alarm once has reached the alarm-center 2, it cannot be stopped by destruction of the transmitter. The alarm center still performs its searchings according to its program, or until the customer has confirmed that he/she has been reached by the message by calling the center 2. At the center 2 there is a computerized keyset code service which makes it possible for the customer to, by means of a digit code, switch off the alarm.

As can be seen in Figure 2 a situation is shown where the SMS-alarm server 2 transmits SMS-messages to a Minicall-center 5, instead of to an SMS-server 3 as in Figure 1. The transmitter of the SMS-alarm is in this case the same as before, but in the central alarm server 2 the SMS-alarm is instead forwarded in form of a minicall-search via a minicall text center 5 to a minicall receiver 6.

It should be realized that the described SMS-transmitter shall be possible to be connected directly to a conventional car alarm which generates sound signals.

The SMS-transmitter can, in the first place, be offered as a complement to different alarm systems for cars, boats, houses etc. This can either be offered to customers by cooperation with manufacturers of alarm systems, or by selling the product themselves as an accessory device to different alarm devices.

Another use is to provide the SMS-transmitter 1 with an own detector of some kind, and in that way use it as a less sophisticated alarm for, for instance, the cellar storage room, the bicycle or the like.

In the following a possible scenario is described with reference to Figure 3.

A customer has bought a car equipped with an alarm which has the supplementary service "SMS-alarm", i.e. a small alarm transmitter is located somewhere in the car. At the purchase the customer had to fill in his/her GSM-number, to which the alarm should be connected, and how many SMS-messages that should be generated each time the alarm is triggered, and how long the interval between them should be. The customer selected the alternative three transmissions with thirty seconds interval, two minutes interruption, and then repeated transmissions according to this schedule, until the SMS-alarm is switched off manually via the telephone service.

One evening when the customer is watching TV, somebody makes an attempt at breaking into the customer's car which is parked two blocks away. The alarm will of course be triggered, but the thieves succeed in silencing the siren after 5-10 seconds. Because everybody are used to people forgetting to deactivate their alarms, nobody will pay attention to the occurrence. Our customer, on the contrary, is well situated since he/she has an "SMS-alarm".

The telephone peeps shortly after the alarm has been triggered and the text "FROM THE CAR: ALARM" will show up on the display of the mobile, whereupon the customer immediately calls the police. Three minutes after the alarm has been triggered, the police is on the spot and the thieves are caught in the act.

The above described is only to be regarded as an advantageous embodiment of the invention, and the scope of protection of the invention is only defined by what are indicated in the following patent claims.

## Claims

1. Device at a telecommunications system for generation of alarm signals, wherein an SMS-transmitter (1) is connected to a detector, said SMS-transmitter (1) transmitting a programmed message to a central server (2) for SMS-alarm when said detector detects an alarm, said server (2) being arranged to identify said SMS-transmitter (1) and transmit a preprogrammed alarm message to a terminal, that is in the possession of an owner of said SMS-transmitter, **characterized in that** said central server (2) is equipped with a computerized key set code service, so that said owner can switch off the alarm by means of a digital code.

2. Device according to patent claim 1,
**characterized in that** said central server (2) transmits a preprogrammed SMS-message, for instance "From the Car: ALARM", to an SMS-server (3), which SMS-server (3) provides searching for said owner's mobile telephone (4), at which the SMS-message is shown to said owner on the display of the mobile telephone, together with warning signals.

3. Device according to patent claim 1,
**characterized in that** said central server (2) transmits a preprogrammed pager message, for instance "From the Car: ALARM", to a pager text center (5), which center (5) provides searching for said alarm owner's pager (6), at which the SMS-message is shown to said owner on the display of the pager, together with warning signals.

4. Device according to any of the previous patent claims, **characterized in that** said SMS-transmitter (1) is equipped with an own alarm detector or connected to an externally arranged alarm detector, at which said SMS-transmitter (1) is arrranged to immediately transmit its subscriber number, for instance 0799-777777, to said central server (2) when said transmitter (1) receives a trigger signal from said alarm detectors, at which said central server (2) is arranged to identify said transmitter and perform the instructions which are connected to said subscriber number.

5. Device according to any of the previous patent claims, **characterized in that** said SMS-transmitter (1) is arranged at a vehicle and connected on one hand to said detector, and on the other to an antenna device, at which said detector generates an alarm signal at physical damage to said vehicle.

6. Device according to any of the previous patent claims, **characterized in that** said SMS-transmitter is connected to a conventional car alarm which generates sound signals.

7. Method at a telecommunications system for generation of alarm signals, wherein an SMS-transmitter (1) connected to a detector transmits a message to a central server (2) for SMS-alarm, when said detector generates an alarm, said server (2) identifies said SMS-transmitter and transmits a preprogrammed alarm message to a terminal, that is in the possession of the owner of said SMS-transmitter, **characterized in that** the owner of said terminal switches off the alarm by calling the central (2) and utilizing a computerized key set code service which makes it possible for the owner to, by means of a digital code, switch off the alarm.

8. Method according to patent claim 7, wherein said SMS-transmitter, together with said detector, constitutes an alarm device in a car, **characterized in that** it includes the steps that:
a) a person/persons makes physical damage to said car, at which the detector generates an alarm signal to said transmitter (1);
b) said SMS-transmitter generates a preprogrammed alarm message, preferably its subscriber number 0799-777777, which is transmitted to a central server (2) for SMS-alarm;
c) said central server identifies said SMS-transmitter (1) and finds out which GSM-number that shall have said preprogrammed message, and what text that shall be in said message; for instance "From the Car: ALARM";
d) said central server (2) transmits said preprogrammed SMS-message to an operator's SMS-server (3), which provides searching for the mobile telephone in question (4);
e) said alarm message is shown on the display of the mobile telephone in question (4) together with sound signals.

9. Method according to claim 7, wherein said SMS-transmitter, together with said detector, constitutes an alarm device in a car, **characterized in that** it includes the steps that:
a) a person/persons makes physical damage to said car, at which the detector generates an alarm signal to said SMS-transmitter (1);
b) said SMS-transmitter (1) generates a message, preferably its subscriber number 0799-777777, which is transmitted to a central server (2) for SMS-alarm;
c) said central server (2) identifies said SMS-transmitter (1) and finds out which pager number that shall have said preprogrammed message, and what text that shall be in said message;
d) said central server (2) transmits said preprogrammed pager text-message to a pager text-center (5) which provides searching for the pager in question (6);
e) said alarm message is shown on the display of the pager in question, together with sound signals.

## Patentansprüche

1. Vorrichtung bei einem Telekommunikationssystem zur Erzeugung von Alarmsignalen, bei der ein SMS-Sender (1) mit einem Detektor verbunden ist, wobei der SMS-Sender (1) eine programmierte Nachricht an einen zentralen Server (2) für einen SMS-Alarm sendet, wenn der Detektor einen Alarm erfasst, wobei der Server (2) dazu eingerichtet ist, den SMS-Sender zu identifizieren und eine vorprogrammierte Alarmnachricht an ein Terminal zu senden, das im Besitz eines Inhabers des SMS-Senders ist, **dadurch gekennzeichnet, dass** der zentrale Server (2) mit einem rechnergestützten Tasten-betätigten Codeservice ausgestattet ist, so dass der Inhaber den Alarm mittels eines digitalen Codes abschalten kann.

2. Vorrichtung gemäß Anspruch 1, **dadurch gekennzeichnet, dass** der zentrale Server (2) eine vorprogrammierte SMS-Nachricht, beispielsweise: "Vom Auto: ALARM", an einen SMS-Server (3) sendet, wobei der SMS-Server (3) eine Suche nach dem Mobiltelefon (4) des Inhabers bewirkt, an dem die SMS-Nachricht dem Inhaber auf der Anzeige des Mobiltelefon zusammen mit Warnsignalen angezeigt wird.

3. Vorrichtung gemäß Anspruch 1, **dadurch gekennzeichnet, dass** der zentrale Server (2) eine vorprogrammierte Pager-Nachricht, beispielsweise: "Vom Auto: ALARM", an ein Pager-Textzentrum (5) sendet, wobei das Zentrum (5) eine Suche nach dem Pager (6) des Alarminhabers bewirkt, an dem die SMS-Nachricht dem Inhaber auf der Anzeige des Pagers zusammen mit Warnsignalen angezeigt wird.

4. Vorrichtung gemäß einem der vorhergehenden Ansprüche, **dadurch gekennzeichnet, dass** der SMS-Sender (1) mit einem eigenen Alarmdetektor ausgestattet oder mit einem extern angeordneten Alarmdetektor verbunden ist, bei dem der SMS-Sender (1) dazu eingerichtet ist, seine Teilnehmernummer, beispielsweise 0799-777777, an den zentralen Server (2) sofort zu senden, wenn der Sender (1) ein Auslösesignal von den Alarmdetektoren empfängt, bei der der zentrale Server (2) dafür sorgt,den Sender zu identifizieren und die Befehle auszuführen, die mit der Teilnehmernummer verbunden sind.

5. Vorrichtung gemäß einem der vorhergehenden Ansprüche, **dadurch gekennzeichnet, dass** der SMS-Sender an einem Fahrzeug angeordnet und einerseits mit dem Detektor und andererseits mit einer Antennenvorrichtung verbunden ist, bei der der Detektor ein Alarmsignal bei einer Beschädigung des Fahrzeugs erzeugt.

6. Vorrichtung gemäß einem der vorhergehenden Ansprüche, **dadurch gekennzeichnet, dass** der SMS-Sender mit einer herkömmlichen Autoalarm verbunden ist, der Tonsignale erzeugt.

7. Verfahren bei einem Telekommunikationssystem zur Erzeugung von Alarmsignalen, bei dem ein mit einem Detektor verbundener SMS-Sender (1) eine Nachricht an einen zentralen Server (2) für einen SMS-Alarm sendet, wobei, wenn der Detektor einen Alarm erzeugt, der Server (2) den SMS-Sender identifiziert und eine vorprogrammierte Alarmnachricht an ein Terminal sendet, das im Besitz des Inhabers des SMS-Senders ist, **dadurch gekennzeichnet, dass** der Inhaber des Terminals den Alarm abschaltet durch Anrufen des zentralen Servers (2) und Anwenden eines rechnergestützten Tasten-betätigten Codeservice, der es dem Inhaber mittels eines digitalen Codes ermöglicht, den Alarm abzuschalten.

8. Verfahren gemäß Anspruch 7, bei dem der SMS-Sender zusammen mit dem Detektor eine Alarmvorrichtung in einem Auto bildet, **dadurch gekennzeichnet, dass** es die folgenden Schritte aufweist:
a) wenn eine Person/Personen einen physischen Schaden an dem Auto verursacht, erzeugt der Detektor ein Alarmsignal an den Sender (1);
b) der SMS-Sender (1) erzeugt eine vorprogrammierte Alarmnachricht, vorzugsweise seine Teilnehmernummer 0799-777777, die an einen zentralen Server (2) für einen SMS-Alarm gesendet wird;
c) der zentrale Server identifiziert den SMS-Sender (1) und findet heraus, welche GMS-Nummer die vorprogrammierte Nachricht aufweisen und welcher Text in der Nachricht sein soll; beispielsweise "Vom Auto: ALARM";
d) der zentrale Server (2) sendet die vorprogrammierte SMS-Nachricht an einen SMS-Server (3) des Betreibers, der eine Suche nach dem in Frage kommenden Mobiltelefon (4) bewirkt;
e) die Alarmnachricht wird auf der Anzeige des in Frage kommenden Mobiltelefons zusammen mit Tonsignalen gezeigt.

9. Verfahren gemäß Anspruch 7, bei dem der SMS-Sender zusammen mit dem Detektor eine Alarmvorrichtung in einem Auto bildet, **dadurch gekennzeichnet, dass** es die folgenden Schritte aufweist:
a) wenn eine Person/Personen einen physischen Schaden an dem Auto verursacht, erzeugt der Detektor ein Alarmsignal an den Sender (1);
b) der SMS-Sender (1) erzeugt eine Nachricht, vorzugsweise seine Teilnehmernummer 0799-777777, die an einen zentralen Server (2) für einen SMS-Alarm gesendet wird;
c) der zentrale Server (2) identifiziert den SMS-Sender (1) und findet heraus, welche Pager-Nummer die vorprogrammierte Nachricht aufweisen und welcher Text in der Nachricht sein soll;
d) der zentrale Server (2) sendet die vorprogrammierte Pager-Textnachricht an ein Pager-Textzentrum (5) sendet, das eine Suche nach dem in Frage kommenden Pager (6) bewirkt;
e) die Alarmnachricht wird auf der Anzeige des in Frage kommenden Pagers zusammen mit Tonsignalen gezeigt.

## Revendications

1. Dispositif d'un système de télécommunication destiné à générer des signaux d'alarme, dans lequel un émetteur SMS (1) est connecté à un détecteur, ledit émetteur SMS (1) transmettant un message programmé à un serveur central (2) d'alarme SMS lorsque ledit détecteur détecte une alarme, ledit serveur (2) étant prévu pour identifier ledit émetteur SMS (1) et transmettre un message d'alarme préprogrammé à un terminal, qui est en la possession d'un propriétaire dudit émetteur SMS, **caractérisé en ce que** ledit serveur central (2) est équipé d'un service de code clavier informatisé, de sorte que ledit propriétaire peut éteindre l'alarme au moyen d'un code numérique.

2. Dispositif selon la revendication 1, **caractérisé en ce que** ledit serveur central (2) transmet un message SMS préprogrammé, par exemple « ALARME en provenance de la voiture », à un serveur SMS (3), lequel serveur SMS (3) recherche ledit téléphone mobile (4) du propriétaire, après quoi le message SMS est montré audit propriétaire sur l'écran du téléphone mobile, conjointement avec des signaux d'avertissement.

3. Dispositif selon la revendication 1, **caractérisé en ce que** ledit serveur central (2) transmet un message préprogrammé de messagerie de poche, par exemple « ALARME en provenance de la voiture », à un centre de messagerie de poche (5), lequel centre (5) recherche le messager de poche (6) dudit propriétaire, après quoi le message SMS est montré audit propriétaire sur l'écran du messager de poche, conjointement avec des signaux d'avertissement.

4. Dispositif selon l'une quelconque des revendications précédentes, **caractérisé en ce que** ledit émetteur SMS (1) est équipé d'un propre détecteur d'alarme ou connecté à un détecteur d'alarme externe, dans lequel ledit émetteur SMS (1) est prévu pour transmettre immédiatement son numéro d'abonné, par exemple 0799-777777, au dit serveur central (2) lorsque ledit émetteur (1) reçoit un signal de déclenchement desdits détecteurs d'alarme, ledit serveur central (2) étant prévu pour identifier ledit émetteur et exécuter les instructions qui sont reliées au dit numéro d'abonné.

5. Dispositif selon l'une quelconque des revendications précédentes, **caractérisé en ce que** ledit émetteur SMS (1) est placé dans un véhicule et connecté d'une part au dit détecteur, et d'autre part à un dispositif d'antenne, dans lequel ledit détecteur génère un signal d'alarme lors de dommages physiques au dit véhicule.

6. Dispositif selon l'une quelconque des revendications précédentes, **caractérisé en ce que** ledit émetteur SMS est connecté à une alarme de voiture conventionnelle qui génère des signaux sonores.

7. Procédé d'un système de télécommunication destiné à générer des signaux d'alarme, dans lequel un émetteur SMS (1) connecté à un détecteur transmet un message à un serveur central (2) d'alarme SMS, lorsque ledit détecteur génère une alarme, ledit serveur (2) identifie ledit émetteur SMS et transmet un message d'alarme préprogrammé à un terminal, qui est en la possession du propriétaire dudit émetteur SMS, **caractérisé en ce que** le propriétaire dudit terminal éteint l'alarme en appelant le central (2) et en utilisant un service de code clavier informatisé qui permet au propriétaire, par l'intermédiaire d'un code numérique, d'éteindre l'alarme.

8. Procédé selon la revendication 7, dans lequel ledit émetteur SMS, conjointement avec ledit détecteur, constitue un dispositif d'alarme d'une voiture, **caractérisé en ce qu'**il inclut les étapes suivantes :
a) une(des) personne(s) crée(nt) des dommages physiques à ladite voiture, suite à quoi le détecteur génère un signal d'alarme au dit émetteur (1) ;
b) ledit émetteur SMS génère un message d'alarme préprogrammé, de préférence son numéro d'abonné 0799-777777, qui est transmis à un serveur central (2) d'alarme SMS ;
c) ledit serveur central identifie ledit émetteur SMS (1) et trouve le numéro GSM qui recevra ledit message préprogrammé, et le texte dudit message ; par exemple « ALARME en provenance de la voiture », ;
d) ledit serveur central (2) transmet ledit message SMS préprogrammé au serveur SMS (3) d'un opérateur, qui recherche le téléphone mobile en question ;
e) ledit message d'alarme est affiché sur l'écran du téléphone mobile (4) en question conjointement avec des signaux sonores.

9. Procédé selon la revendication 7, dans lequel ledit émetteur SMS, conjointement avec ledit détecteur, constitue un dispositif d'alarme d'une voiture, **caractérisé en ce qu'**il inclut les étapes suivantes :
a) une(des) personne(s) crée(nt) des dommages physiques à ladite voiture, suite à quoi le détecteur génère un signal d'alarme au dit émetteur SMS (1) ;
b) ledit émetteur SMS (1) génère un message, de manière préférée son numéro d'abonné 0799-777777, qui est transmis à un serveur central (2) d'alarme SMS ;
c) ledit serveur central (2) identifie ledit émetteur SMS (1) et trouve le numéro de messager de poche qui recevra ledit message préprogrammé, et le texte dudit message ;
d) ledit serveur central (2) transmet ledit message de texte préprogrammé de messagerie de poche à un centre de messagerie de poche, qui recherche le messager de poche en question ;
e) ledit message d'alarme est affiché sur l'écran du messager de poche en question, conjointement avec des signaux sonores.
